(19) **Europäisches Patentamt**

**European Patent Office**

**Office européen des brevets**

(11) **EP 1 314 953 A2**

(12) **EUROPÄISCHE PATENTANMELDUNG**

(43) Veröffentlichungstag:
28.05.2003 Patentblatt 2003/22

(51) Int Cl.⁷: **G01B 9/02**, G01B 11/24

(21) Anmeldenummer: 02021069.6

(22) Anmeldetag: **21.09.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **24.11.2001 DE 10157842**

(71) Anmelder:
• **Carl Zeiss**
  **89518 Heidenheim (Brenz) (DE)**
  Benannte Vertragsstaaten:
  **DE FR**
• **Carl Zeiss Stiftung Trading as Carl Zeiss**
  **89518 Heidenheim (DE)**
  Benannte Vertragsstaaten:
  **GB**

(72) Erfinder: **Hauger, Christoph, Dr.**
  **73431 Aalen (DE)**

(54) **Interferometer und interferometrisches Messverfahren**

(57)     Die Erfindung betrifft ein Interferometer (1000) mit wenigstens einem Probenstrahlengang zur Bereitstellung von Licht in einem Probenstrahlbereich, wenigstens einem Referenzstrahlengang, wenigstens einer Einheit zur Überlagerung von Licht aus dem Probenstrahlbereich mit Licht aus dem Referenzstrahlengang und einer Einrichtung zur Erfassung einer Interferenzerscheinung von Licht aus dem Probenstrahlbereich und Licht aus dem Referenzstrahlengang, sowie ein Verfahren zur interferometrischen Bestimmung der Bewegungsgeschwindigkeit eines Objektes. Bei dem Interferometer (1000) ist eine räumliche Auflösung der Einrichtung zur Erfassung einer Interferenzerscheinung (1022) auf eine charakteristische Frequenz der Interferenzerscheinung abgestimmt. Indem zwei oder mehr Referenzstrahlengänge vorgesehen werden, hat das Interferometer einen großen Tiefenhub. Durch Auswerten der zeitlichen Änderung eines erfassten Interferenzsignals kann die Bewegung von Streuzentren vermessen werden. Die Ausrüstung eines Operationsmikroskopes mit einen solchen Interferometer ermöglicht es, Bereiche eines Operationsgebietes sichtbar zu machen, welche mit Licht im sichtbaren Spektralbereich nicht zugänglich sind.

FIG.10

## Beschreibung

Die Erfindung betrifft ein Interferometer mit wenigstens einem Probenstrahlengang zur Bereitstellung von Licht in einem Probenstrahlbereich, wenigstens einem Referenzstrahlengang, wenigstens einer Einheit zur Überlagerung von Licht aus dem Probenstrahlbereich mit Licht aus dem Referenzstrahlengang und einer Einrichtung zur Erfassung einer Interferenzerscheinung von Licht aus dem Probenstrahlbereich und Licht aus dem Referenzstrahlengang sowie ein interferometrisches Meßverfahren, bei dem über wenigstens einen Probenstrahlgang Licht in einem Probenstrahlbereich bereitgestellt wird, und Licht aus dem Probenstrahlbereich mit Licht aus einem Referenzstrahlengang zur Erzeugung einer Interferenzerscheinung überlagert wird.

Ein Interferometer der eingangsgenannten Art und ein derartiges Verfahren zum Betrieb eines Interferometers ist beispielsweise aus der DE 199 29 406 A1 bekannt. Dort ist ein Interferometer zur Aufnahme von Tiefenprofilen in einer Probe mittels Weißlicht beschrieben.

Bei Weißlicht-Interferometrie wird "weißes Licht", d.h. Licht mit einer vergleichsweise kurzen Kohärenzlänge verwendet. Die Kohärenzlänge eines optischen Signals ist eine Länge, über die eine Phasenkorrelation des optischen Signals besteht. Für eine Quelle mit großer Kohärenzlänge, wie etwa einen Helium-Neon-Laser, kann diese Länge mehrere Kilometer betragen, während sie für eine breitbandige Weißlichtquelle, wie etwa das Sonnenlicht, nur einige Mikrometer beträgt. Für Quellen mit derart kurzer Kohärenzlänge tritt optische Interferenz zwischen aufgeteilten und anschließend wieder überlagerten Strahlgängen nur dann auf, wenn die optischen Weglängen der beiden Strahlengänge zwischen deren Aufteilung und Überlagerung innerhalb einiger optischer Weglängen bzw. der Kohärenzlänge übereinstimmen.

Das Interferometer der DE 199 29 406 A1 hat eine Superlumineszenzdiode zur Erzeugung von für Weißlicht-Interferometrie geeignetem Licht. Dieses Licht wird in einen Probenstrahlengang und einen Referenzstrahlengang eingekoppelt. Der Referenzstrahlengang umfasst einen Spiegel als Reflektorelement. Mit dem Probenstrahlengang wird ein Objekt, dessen Tiefenprofil vermessen werden soll, abgetastet. Das entsprechend reflektierte Licht wird auf einer Sensorfläche in Form einer CCD-Zeile zur Überlagerung gebracht. Aus der Lage einer Interferenzerscheinung auf der CCD-Zeile wird auf einen optischen Weglängenunterschied zwischen Licht im Probenstrahlengang und im Referenzstrahlengang geschlossen. Aus dem ermittelten optischen Weglängenunterschied wird die Position von Streuzentren für Licht in der abgetasteten Probe bestimmt und graphisch dargestellt.

Aus der US 5,321,501 sind ein Interferometer und ein Verfahren zur Aufnahme von Tiefenprofilen einer Probe mit kurzkohärentem Licht aus einer Superlumineszenzdiode bekannt. Dabei wird das kurzkohärente Licht der Superlumineszenzdiode in einen Probenzweig und einen Referenzzweig eingekoppelt. Mit dem Licht im Probenzweig wird ein Bereich einer Probe abgetastet. Das Licht im Referenzzweig wird einem beweglichen Spiegel zugeführt, um so die optische Weglänge des Referenzzweiges einstellen zu können. Weiter ist ein Photodetektor vorgesehen, an dem das Licht aus dem Proben- und dem Referenzzweig zur Interferenz gebracht wird. Aus der zeitlich aufeinanderfolgenden Veränderung von Interferenzerscheinungen am Photodetektor und der bekannten Stellung des Spiegels im Referenzzweig kann auf die Lage von Streuzentren im Probenzweig geschlossen werden.

Aufgabe der Erfindung ist es, ein Interferometer mit hoher Messgenauigkeit sowie ein Verfahren zur Durchführung interferometrischen Bestimmung der Bewegungsgeschwindigkeit eines Objektes bereitzustellen.

Diese Aufgabe wird durch ein Interferometer mit den Merkmalen der Ansprüche 1, 8 und 9 sowie ein Verfahren mit den Merkmalen des Anspruchs 13 gelöst.

Ein Interferometer gemäß Anspruch 1 hat wenigstens einen Probenstrahlengang zur Bereitstellung von Licht in einem Probenstrahlbereich, wenigstens einen Referenzstrahlengang, wenigstens eine Einheit zur Überlagerung von Licht aus dem Referenzstrahlengang mit Licht aus dem Probenstrahlbereich und eine Einrichtung zur Erfassung einer Interferenzerscheinung von Licht aus dem Probenstrahlbereich und Licht aus dem Referenzstrahlengang, wobei eine räumliche Auflösung der Einrichtung zur Erfassung einer Interferenzerscheinung auf eine charakteristische Frequenz der Interferenzerscheinung abgestimmt ist. Die charakteristische Frequenz einer Interferenzerscheinung ist die räumliche Änderungsrate, mit der sich in Abhängigkeit des Ortes an einer Einrichtung zur Erfassung einer Interferenzerscheinung die Intensität von Licht mit Interferenzerscheinung ändert. Unter einer Abstimmung der Einrichtung zur Erfassung einer Interferenzerscheinung auf eine charakteristische Frequenz der Interferenzerscheinung wird dabei verstanden, dass die Einrichtung zur Erfassung der Interferenzerscheinung so ausgelegt ist, dass mindestens die charakteristische Frequenz der Interferenzerscheinung mit einer Detektoreinheit des Interferometers räumlich aufgelöst werden kann. Auf diese Weise wird ein Parameter-optimiertes Interferometer geschaffen, das bei relativ geringem Signalrauschen auf der Grundlage vergleichsweise weniger Daten eine zuverlässige Abstandsbestimmung ermöglicht.

In Weiterbildung der Erfindung ist bei dem Interferometer wenigstens ein Bereich der Einrichtung zur Erfassung einer Interferenzerscheinung als CCD-Zeile ausgebildet, wobei die Zahl der von einer charakteristischen Periode der Interferenzerscheinung erfassten Pixel auf der CCD-Zeile wenigstens zwei beträgt. Auf diese Weise kann die Anzahl von Pixeln auf der CCD-Zeile gering gehalten werden. Damit werden hohe Auslesegeschwindigkeiten für die CCD-Zeile und eine einfachere Datenverarbeitung aufgrund einer entsprechend geringen Datenmenge ermöglicht.

In Weiterbildung der Erfindung umfaßt bei dem Interferometer die Einheit zur Überlagerung von Licht aus dem Probenstrahlbereich mit Licht aus dem Referenzstrahlengang ein optisches Abbildungssystem, dessen Apertur für Probenstrahlengang und den Referenzstrahlengang an die Einrichtung zur Auswertung einer Interferenzerscheinung angepasst ist. Diese Anpassung der Apertur des optischen Abbildungssystems gewährleistet, daß sämtliches Licht aus dem Probenstrahlengang und Referenzstrahlengang von der Einrichtung zur Erfassung einer Interferenzerscheinung erfaßt wird. Auf diese Weise wird ein gutes Signal-Rauschverhältnis hinsichtlich Hell-Dunkelinformation auf der Einrichtung zur Erfassung der Interferenzerscheinung erzielt.

In Weiterbildung der Erfindung umfasst das Interferometer zum Ausleuchten eines lichtempfindlichen Bereiches der Einrichtung zur Erfassung einer Interferenzerscheinung ein optisches Abbildungssystem, das den lichtempfindlichen Bereich mit Licht aus dem Probenstrahlbereich und mit Licht aus dem Referenzstrahlengang bis zum doppelten Gaußradius ausleuchtet. Hierunter ist zu verstehen, daß die Strahlungsintensität von Licht, das im Probenstrahlbereich und im Referenzstrahlbereich reflektiert wird und auf den lichtempfindlichen Bereich der Einrichtung zur Erfassung einer Interferenzerscheinung gelangt, wenigstens dem $1/e^2$-ten Anteil der maximalen Strahlungsintensität dieses Lichts am lichtempfindlichen Bereich der Einrichtung zur Erfassung einer Interferenzerscheinung entspricht. Auf diese Weise wird eine an den Dynamikbereich einer CCD-Zeile optimierte Ausleuchtung der CCD-Zeile geschaffen.

In Weiterbildung der Erfindung umfasst das optische Abbildungssystem in dem Interferometer einen in Lichtleitern geführten Probenstrahlengang und Referenzstrahlengang, wobei ein gegenseitiger Abstand $2a$ der Lichtleiter-Enden, aus denen Licht zu einem als CCD-Zeile ausgebildeten Bereich für die Erfassung einer Interferenzerscheinung austritt, ein Abstand $d$ der Lichtleiter-Enden zu einem lichtempfindlichen Bereich der Einrichtung zur Erfassung einer Interferenzerscheinung, eine Wellenlänge $\lambda$ des in dem Interferometer eingesetzten Lichtes und die Abmessung $\Delta x$ eines Pixels auf der CCD-Zeile folgender Beziehung genügen:

$$\frac{\lambda d}{2a\Delta x} \geq 2.$$

Auf diese Weise kann bei gegebener Pixelgeometrie der CCD-Zeile eine optimale Empfindlichkeit des Interferometers erzielt werden.

In Weiterbildung der Erfindung ist bei dem Interferometer der Einrichtung zur Erfassung der Interferenzerscheinung eine Filterstufe zur Entstörung einer erfassten Interferenzerscheinung zugeordnet. Auf diese Weise kann ein optischer Gangunterschied zwischen einem Probenstrahlengang und Referenzstrahlengang auch bei schlechten Reflexionseigenschaften eines abgetasteten Probenbereichs detektiert werden.

In Weiterbildung der Erfindung ist bei dem Interferometer die Filterstufe als Heterodyn-Filterstufe ausgebildet, wobei die Heterodyn-Filterfrequenz einer charakteristischen Frequenz der Interferenzerscheinung entspricht. Auf diese Weise wird eine besonders schmalbandige Bandpaß-Filterung der Interferenzerscheinungen ermöglicht. Das gestattet, Interferenzerscheinungen mit geringem Signal - Rauschverhältnis zu erfassen. So kann insbesondere die Position von Streuzentren vergleichsweise geringer Reflektiviät bestimmt werden kann..

Ein Interferometer nach Anspruch 8 hat wenigstens einen Probenstrahlengang zur Bereitstellung von Licht in einem Probenstrahlbereich, wenigstens einen Referenzstrahlengang, wenigstens eine Einheit zur Überlagerung von Licht aus dem Probenstrahlbereich mit Licht aus dem Referenzstrahlengang und eine Einrichtung zur Erfassung einer Interferenzerscheinung von Licht aus dem Probenstrahlbereich und Licht aus dem Referenzstrahlengang, wobei der Einrichtung zur Erfassung einer Interferenzerscheinung eine Schwingungssignalerfassung zur Bestimmung der zeitlichen Änderung der Interferenzerscheinung zugeordnet ist. Auf diese Weise wird ein Interferometer geschaffen, mittels dessen eine Bewegung von Streuzentren im Probenstrahlbereich präzise vermessen werden kann.

Bei einem Interferometer nach Anspruch 9 ist neben einem ersten Referenzstrahlengang ein zweiter Referenzstrahlengang vorgesehen. Auf diese Weise kann der optische Gangunterschied für an einem Streuzentrum im Probenstrahlbereich reflektierten Licht bezüglich zwei Referenzstrecken ermittelt werden. So lässt sich ein statistischer Messfehler minimieren und es wird eine größere Messgenauigkeit erzielt.

In Weiterbildung der Erfindung sind die optischen Weglängen von erstem und zweiten Referenzstrahlengang verschieden. Indem die Messbereiche der jeweiligen Referenzstrahlengänge aneinander angepasst sind, kann ein Interferometer mit großer Dynamik bereitgestellt werden. Im Vergleich zu einem Interferometer mit nur einem Referenzstrahlengang ist der Tiefenhub eines solchen Interferometers um den zusätzlichen Tiefenhub eines weiteren Referenzstrahlengangs erweitert.

In Weiterbildung der Erfindung ist der Quotient aus einer charakteristischen Frequenz einer auf Probenstrahlengang und einem ersten Referenzstrahlengang basierenden Interferenzerscheinung an einer Einrichtung zur Erfassung der Interferenzerscheinung und einer charakteristischen Frequenz einer auf Proben- und zweiten Referenzstrahlengang basierenden Interferenzerscheinung in einer Einrichtung zur Erfassung der Interferenzerscheinung weder eine ganze Zahl noch ein ganzzahliger Bruch. Auf diese Weise wird eine gute Signaltrennung auf einzelnen etwa auf einer CCD-Zeile überlagerten Interferenz Erscheinungen mittels Heterodynfilterung ermöglicht. Hierbei wird ausgenützt, dass in Filterfunktionsbereichen, die jeweiligen Oberschwingungen der charakteristischen Frequenzen entsprechen, keine Signale vorliegen, denen Interferenzerscheinungen zugrunde liegen, die auf dem entsprechend anderen Referenzstrahlengang mit dessen charakteristischer Grund-Frequenz basieren.

Ein mit einem entsprechenden Interferometer ausgerüstetes Operationsmikroskop ermöglicht für einen Operateur dreidimensionale Schnittdarstellungen eines Operationsgebietes.

Bei einem Verfahren zur interferometrischen Bestimmung der Bewegungsgeschwindigkeit eines Objektes gemäß Anspruch 13, insbesondere zur ortsaufgelösten interferometrischen Bestimmung der Bewegungsgeschwindigkeit eines Mediums, wird über wenigstens einen Probenstrahlengang Licht in einem Probenstrahlbereich bereitgestellt, mit wenigstens einem Referenzstrahlengang Licht in einem Referenzstrahlbereich bereitgestellt und Licht aus dem Probenstrahlbereich mit Licht aus einem Referenzstrahlengang zur Erzeugung einer Interferenzerscheinung überlagert, wobei eine zeitliche Änderung der Interferenzerscheinung erfasst wird und aus der zeitlichen Änderung der Interferenzerscheinung eine Bewegungsgeschwindigkeit bestimmt wird. Auf diese Weise ist es beispielsweise möglich, die Fließgeschwindigkeit eines Mediums in einer Kapillare zu bestimmen.

In Weiterbildung der Erfindung wird Licht aus wenigstens einem Probenstrahlengang in einem Probenstrahlbereich fokussiert. Auf diese Weise ist die räumlich aufgelöste Aufnahme von Strömungsprofilen in eine Kappilare möglich. Etwa kann so die lokale Strömung von Blut in Adern ausgemessen werden.

In Weiterbildung des Verfahrens wird die Interferenzerscheinung mittels einer CCD-Zeile erfasst und die zeitliche Änderung der Interferenzerscheinung aus einem Vergleich von zeitlich aufeinanderfolgend ausgelesenen Bildern der CCD-Zeile bestimmt. Auf diese Weise kann eine Bewegung von Streuzentren im Probenstrahlbereich eines Interferometers mit großer Genauigkeit bestimmt werden.

Vorteilhafte Ausführungsformen der Erfindung sind in den Zeichnungen dargestellt und werden nachfolgend beschrieben.

Es zeigen:

Fig. 1      eine schematische Darstellung einer ersten Ausführungsform des Interferometers;

Fig. 2      einen Ausschnitt des Interferometers aus Fig. 1;

Fig. 3      ein mittels einer CCD-Zeile erfasstes Interferometersignal beim Interferometer aus Fig. 1;

Fig. 4      ein mit dem Interferometers aus Fig. 1 gemessenes Abstandsinformationssignal, dem zwei reflektierende Flächen zugrunde liegen;

Fig. 5      einen Abtastbereich des Interferometers aus Fig. 1, in dem eine Probe mit inhomogener Streuzentrenverteilung angeordnet ist;

Fig. 6      eine mittels des Interferometer aus Fig. 1 gewonnene Ortsinformation über die Streuzentren bei der Probe aus Fig. 5;

Fig. 7      einen Ausschnitt des Interferometers aus Fig. 1 und eine Kapillare mit Flüssigkeitsströmung;

Fig. 8      das Strömungsprofil einer laminaren Strömung in der Kapillare aus Fig. 7;

Fig. 9      die mittels des Interferometers aus Fig. 1 gewonnene Information über die Flüssigkeitsströmung in Form einer zeitlichen Phasenänderung;

Fig. 10     eine schematische Darstellung einer zweiten Ausführungsform des Interferometers für erweiterten Tiefenhub;

Fig. 11     einen Ausschnitt des Interferometers aus Fig. 10; und

Fig. 12     ein mittels einer CCD-Zeile erfasstes Interferometersignal beim Interferometer aus Fig. 10.

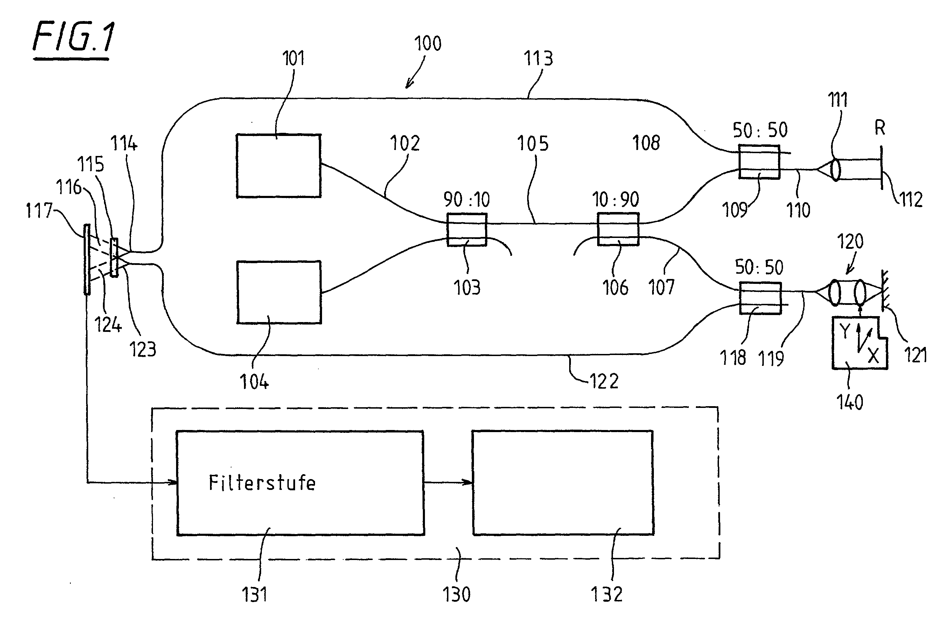

Die Fig. 1 zeigt ein Interferometer 100 mit einer Weißlichtquelle 101, welche als Superlumineszenzdiode ausgebildet ist. Die Weißlichtquelle 101 emittiert Lumineszenzlicht im Wellenlängenbereich von 850 nm bei einer Kohärenzlänge von etwa 10 nm. Selbstverständlich können auch Weißlichtquellen eingesetzt werden, die Licht in anderen Spektralbereichen erzeugen. Die Weißlichtquelle 101 stellt Licht für einen Probenstrahlengang und einen Referenzstrahlengang bereit. Hierzu wird das Licht aus der Weißlichtquelle 101 in einen Lichtleiter 102 eingekoppelt, in dem eine Lichtkopplungseinheit 104 angeordnet ist. Dort wird das Licht aus der Weißlichtquelle 101 mit Licht aus einer Laserdiode 104, die Licht im sichtbaren Spektralbereich abstrahlt, im Verhältnis 90:10 vermischt. Mit dem sichtbaren Licht aus der Laserdiode 104 wird ein Justier-Laserstrahl für den Probenbereich des Interferometers 100 bereitgestellt. Durch einen Lichtleiter 105 wird das mit sichtbarem Laserlicht vermischte Weißlicht einer weiteren Lichtkopplungseinheit 106 zugeführt, die Licht in einen Probenstrahlengang mit Lichtleiter 107 und einen Referenzstrahlengang mit Lichtleiter 108 koppelt. Die Lichtkopplungseinheit verteilt das ihr zugeführte Licht aus dem Lichtleiter 105 in den Probenstrahlengang und den Referenzstrahlengang im Verhältnis 90:10. Sie wirkt als Lichtweiche, indem sie 90% des Lichtes aus Lichtleiter 105 in den Lichtleiter 107 leitet und 10% des Lichtes aus dem Lichtleiter 105 dem Lichtleiter 108 zuführt.

Im Referenzstrahlgangg ist eine weitere Lichtkopplungseinheit 109 vorgesehen, die Licht für einen Referenzbereich über einen Lichtleiter 110 mit Linsensystem 111 bereitstellt. Dieser Referenzstrahlbereich im Referenzstrahlengang umfaßt einen Spiegel 112, dem das Licht aus Lichtleiter 110 zugeführt wird. Das an dem Spiegel 112 reflektierte Licht wird in den Lichtleiter 110 zurückgeworfen und wieder zur Lichtkopplungseinheit 109 geleitet. Die Lichtkopplungseinheit zweigt 50% des ihr aus dem Lichtleiter 110 zugeführten Lichtes in den Lichtleiter 113 ab und führt es einer Einrichtung zur Erfassung einer Interferenzerscheinung von Reflexionslicht aus dem Probenstrahlbereich und dem Reflexionsstrahlbereich zu. Diese Einrichtung zur Erfassung einer Interferenzerscheinung umfaßt eine CCD-Zeile 117 als Detektoreinheit, auf die das aus dem Austrittsende 114 von Lichtleiter 113 austretende Licht über eine Zylinderlinse 115 mit einem Strahlenbündel 116 geworfen wird.

Das mit der Lichtkopplungseinheit 106 in den Probenstrahlengang eingekoppelte Licht wird über eine Lichtkopplungseinheit 118 und einen Lichtleiter 119 mit der Lichtkopplungseinheit 106 in den Probenstrahlengang mit einem optischen Abbildungssystem 120 auf einem Probenbereich einer untersuchten Probe 121 fokussiert.

Das Reflexionslicht von der Probe 121 wird über das optische Abbildungssystem 120 und den Lichtleiter 119 zurückgeworfen und wieder der Lichtkopplungseinheit 118 zugeführt, welche 50% des Lichtes aus Lichtleiter 119 in den Lichtleiter 122 einkoppelt.

Entsprechend dem Licht aus Lichtleiter 113 wird das Licht aus Lichtleiter 122 am Lichtleiterende 123 über die Zylinderlinse 115 ausgekoppelt und mit einem Strahlenbündel 124 auf die CCD-Zeile 117 geworfen. Mit der CCD-Zeile 117 wird eine Interferenzerscheinung erfaßt, die bei Vorliegen einer Interferenzbedingung durch Superposition von Licht aus dem Probenbereich mit Licht, das am Referenzspiegel 112 reflektiert wurde, entsteht.

Der CCD-Zeile 117 ist eine Interferenzsignal-Auswerteeinheit 130 zugeordnet. Diese Interferenzsignal-Auswerteeinheit 130 umfasst eine Filterstufe 131, an die sich eine Schwingungssignalerfassungsstufe 132 anschließt.

Das Interferometer umfasst weiter eine Scan-Einheit 140, die ein zweidimensionales Abrastern der untersuchten Probe 121 ermöglicht. Aus der Abrastungsposition der Scan-Einheit und durch Auswerten der an der CCD-Zeile 117 auftretenden Interferenzerscheinung kann eine Streuzentrenverteilung im Probenbereich als dreidimensionales Bild sichtbar gemacht werden.

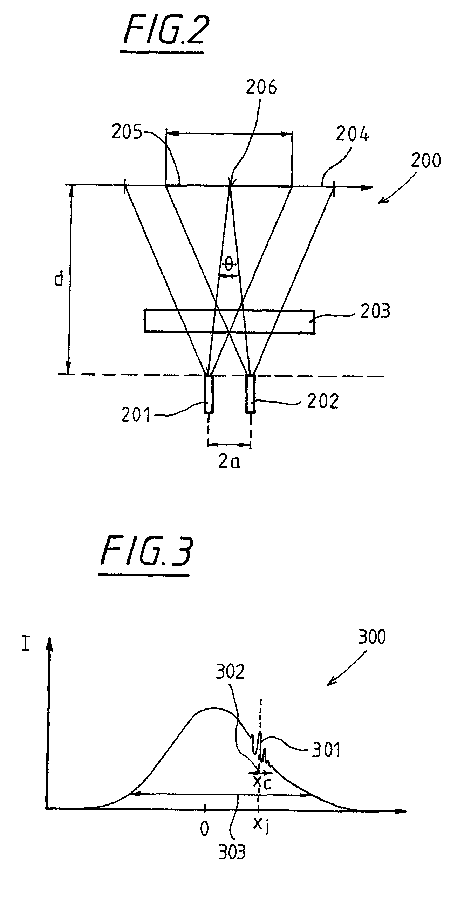

Die Fig. 2 zeigt einen Ausschnitt 200 des Interferometers aus Fig. 1, der den Endbereich der Lichtleiter 114 und 123, sowie die Zylinderlinse 115 mit der CCD-Zeile 117 umfasst.

Licht aus den Lichtleitern 201 und 202 tritt durch die Zylinderlinse 203 und wird als Linienzug auf der CCD-Zeile 204 abgebildet. Dieser Linienzug wird mit den lichtempfindlichen Detektor-Pixeln der CCD-Zeile 204 erfaßt. Das aus den Lichtleitern 201 und 202 austretende Licht hat eine gaußförmige Intensitätsverteilung. Auf der CCD-Zeile 204 stellt sich damit eine resultierende Gesamtintensität $I$ ein, der als Einhüllende eine Überlagerung zweier gaußförmiger Intensitätsverteilungen für das Licht auf der CCD-Zeile zugrunde liegt.

Bei Annahme einer gleichen Reflektivität von Probenbereich 121 beim Interferometer aus Fig. 1 und dem Referenzspiegel 112 gilt für die Intensitätsverteilung I auf der CCD-Zeile 117 in Abhängigkeit des Ortes $x$ bei einer Wahl des Koordinatenursprungs an der mit dem Bezugszeichen 206 gemachten Stellen in Fig. 2:

$$I(x) = 2I_0\left[1 + V_x \cos\left(2\pi \frac{c}{\lambda}\left[\tau_x + \Delta\tau_z\right] + \varphi_x\right)\right],$$

wobei:

$\lambda$      die mittlere Wellenlänge des Lichtes aus der Weißlichtquelle,

c      die Lichtgeschwindigkeit,

$\tau_x = \frac{\theta x}{c}$      für verschiedene Orte auf der CCD-Zeile der Laufzeitunterschied für Lichtes aus den beiden Lichtleitern 201 und 201 mit dem Öffnungswinkel θ = aus Fig. 2 für verschiedene Orte auf der CCD-Zeile aus Fig. 2,

$\Delta\tau_z$ der Laufzeitunterschied des Lichtes aus den beiden Lichtleitern 201 und 202 aufgrund unterschiedlicher optischer Weglängen von Probenstrahlengang und Referenzstrahlengang des Interferometers aus Fig. 1,

$V_x$ die Einhüllende der Interferenzerscheinung in Form einer gaußförmigen Verteilung mit Halbwertsbreite $x_c = \frac{l_c}{\theta}$ für eine Kohärenzlänge $l_c$ des Lichtes aus der verwendeten Weißlichtquelle beschreibt, und

$\varphi_x$ ein Phasenfaktor mit im Vergleich zum oszillatorischen Anteil der Interferenzerscheinung schwacher Ortsabhängigkeit ist.

Die Fig. 3 zeigt im vergrößerten Maßstab eine Intensitätsverteilung 300 mit Interferenzerscheinung 301 am Ort $x_i$ an der CCD-Zeile 117 aus Fig. 1. Die Interferenzerscheinung 301 hat die charakteristische Frequenz

$$k_c = 2\pi \frac{\theta}{\lambda}$$

und erstreckt sich am Ort $x_i$ über eine Breite

$$x_c = \frac{l_c}{\theta}.$$

Der Ort $x_i$ der Interferenzerscheinung 301 in Fig. 3 auf der CCD-Zeile 117 des Interferometers 100 aus Fig. 1 ist also durch die unterschiedliche optische Weglänge des Lichtes der Weißlichtquelle im entsprechenden Proben- und Referenzzweig bestimmt. Er entspricht einem definierten optischen Gangunterschied von Referenzstrahlengang und einem von einem Streuzentrum im Probenstrahlengang reflektierten Lichtstrahlenbündel. Durch Auswerten der Lage der Interferenzerscheinung 301 in Fig. 3 auf der CCD-Zeile 117 des Interferometers 100 aus Fig. 1 kann damit die genaue Position eines Streuzentrums im Probenstrahlbereich vermessen werden. Aus der zeitlichen Änderung der Interferenzerscheinung auf der CCD-Zeile kann weiter auf den Bewegungszustand von Streuzentren im Probenstrahlbereich geschlossen werden. So ist es insbesondere möglich, ortsaufgelöst deren Geschwindigkeit zu vermessen.

Bei dem Interferometer 100 aus Fig. 1 ist die Einrichtung zur Erfassung einer Interferenzerscheinung mit der CCD-Zeile 117 und der Zylinderlinse 115 auf die charakteristische Frequenz der Interferenzerscheinung angepaßt. Hierfür ist der gegenseitige Abstand 2a der Enden der Lichtleiter 201 und 202 sowie der Abstand d der Lichtleiter-Enden von der CCD-Zeile 204 derart auf Abstand und Größe Δx der CCD-Zeilen Detektor-Pixel abgestimmt, daß eine räumliche Änderung eines mit der CCD-Zeile 117 erfaßten Lichtintensitätssignals bei der charakteristischen Frequenz aufgelöst werden kann. So kann durch Auslesen der CCD-Zeile 204 eine Intensitätsschwankung des Lichtes an der CCD-Zeile 204, die mit einer räumlichen Frequenz variiert, welche geringer ist als die charakteristische Frequenz, erfaßt werden. Gleichzeitig mitteln sich so auch Intensitätsschwankungen von Licht, die auf der CCD-Zeile 204 etwa aufgrund von Störeffekten bei höheren Frequenzen als der charakteristischen Frequenz auftreten, gegenseitig weg.

Der Bereich 205 auf der CCD-Zeile 204 wird gleichzeitig mit Licht aus dem Lichtleiter 201 und dem Lichtleiter 202 so ausgeleuchtet, daß auf den lichtempfindlichen Bereich der CCD-Zeile 204 die Lichtstrahlen aus den Lichtleitern 201 und 202 mit einem Strahlverlauf treffen, der innerhalb des doppelten Gaußradius des entsprechenden Intensitätsprofils der aus den jeweiligen Lichtleitern 201 und 202 austretenden Strahlen entspricht. Es bemerkt, dass es grundsätzlich auch möglich ist, die CCD-Zeile 204 mit Licht aus den Lichtleitern 201 und 202 unter einem anderen Intensitätsprofil auszuleuchten. Etwa kann die CCD-Zeile 204 nur bis zum einfachen Gaußradius ausgeleuchtet werden, d. h. die resulutierende Strahlungsintensität des Lichtes, das auf die CCD-Zeile 204, gelangt, beträgt wenigstens den 1/e-ten Teil der Maximalintensität auf der CCD-Zeile 204.

Der Tiefenhub des eines solchen Interferometers wird durch den ausgeleuchteten Bereich der CCD-Zeile bestimmt, in dem Licht aus dem Probenzweig und dem Referenzzweig miteinander interferieren können. Unter der Annahme das in diesem Bereich $N$ Pixel der CCD-Zeile liegen und die räumliche Periode $P_c$ eines Interferenzsignals mit der charakteristischen Frequenz $k_c$ $P$ Pixel abdeckt, so ergibt sich der Tiefenhub $\Delta z$ des Interferometers unter Verwendung von Weißlicht aus der Weißlichtquelle mit einer mittleren Wellenlänge $\lambda$ zu:

$$\Delta z = \frac{N\lambda}{2P}.$$

Dies bedeutet, dass die Lage von Streuzentren im Probenstrahlbereich nur über die Tiefe $\Delta z$ bestimmt werden kann.

Beim Interferometer 100 aus Fig. 1 sind weiter Größe und der Abstand der Detektorpixel der CCD-Zeile 117 aus Fig. 1 so gewählt, dass Intensitätsschwankungen von Interferenzlicht, die mit der Periode der charakteristischen Frequenz $k_c$ auftreten, wenigstens zwei Detektorpixel abdecken. Mit dieser Maßnahme wird ein größtmöglicher Meßbereich erzielt.

Zur Erfassung einer Lageinformation über ein Streuzentrum im Probenstrahlbereich wird die CCD-Zeile 117 aus Fig. 1 zeitlich aufeinanderfolgend ausgelesen und die Helligkeitsinformation eines jeden CCD-Pixels in einen Spannungswert umgewandelt. Durch den seriellen Auslesevorgang wird ein zeitabhängiges elektrisches Spannungssignal generiert, aus dem durch Filterung, welche eine Entstörung des Interferenzsignals bewirkt, die dem Interferenzsignal auf der CCD-Zeile innenwohnenden Informationen gewonnen werden können.

Hierzu wird das zeitabhängige elektrische Spannungssignal in der Filterstufe 131 der Interferenzsignal-Auswerteeinheit 130 beim Interferometer aus Fig. 1 einer schmalbandigen Bandpassfilterung auf einer zeitlichen Frequenz unterzogen, die der charakteristischen Frequenz $k_c$ entspricht. Indem die Filterstufe 131 als Heterodynfilter mit einer Filterfrequenz, die der charakteristischen Frequenz $k_c$ entspricht, ausgebildet ist, wird eine besonders schmalbandige Filterfunktion realisiert. Zur Filterung können jedoch auch andere Filterprinzipien herangezogen werden wie etwa LC-Filteranordnungen oder Ähnliches.

In der Schwingungssignalerfassungsstufe 132, die der Filterstufe 131 beim Interferometer 100 aus Fig. 1 nachgeschaltet ist, wird die Einhüllende des gefilterten Spannungssignals bestimmt. Die Größe dieses Spannungssignals zu einem bestimmten Zeitpunkt ist ein Maß für Lage und Größe eines Streuzentrums im Probenstrahlbereich.

Weiter wird in der Schwingungssignalerfassungsstufe 132 die Phasenlage des gefilterten Spannungssignals zu einem Referenzwert bestimmt. Hierfür werden die Zeitpunkte des Nulldurchgangs für das gefilterte Spannungssignal ermittelt. Durch Verfolgen der Phasenlage einer Interferenzerscheinung bei aufeinanderfolgenden Auslesevorgängen der CCD-Zeile kann so durch Messen der Phasenlage des gefilterten Spannungssignals auf die Bewegung eines Streuzentrums im Probenstrahlbereich des Interferometers 100 aus Fig. 1 geschlossen werden.

Zur Untersuchung mit dem Interferometer eignen sich grundsätzlich beliebige Objekte, die auf sie eingestrahltes Licht zu einem gewissen Anteil reflektieren. So können insbesondere biologisches Material, wie etwa Bereiche des menschlichen oder tierischen Körpers oder Pflanzen untersucht werden. Genauso gut ist es aber auch möglich, mittels des Interferometers Werkstücke aus der industriellen Fertigung auszumessen, etwa Dreh- oder Frästeile, deren Abmessungen exakt bestimmt werden müssen, und insbesondere auch Linsen.

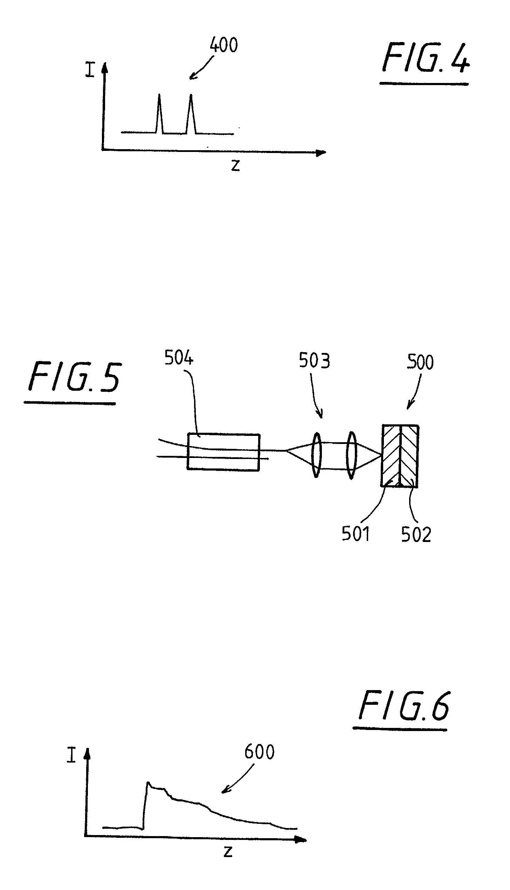

Die Fig. 4 zeigt ein Abstandssignal 400, das durch Auswerten eines von der CCD-Zeile 117 im Interferometer 100 aus Fig. 1 bereitgestellten Spannungssignals gewonnen ist. Die mit der Schwingungssignalerfassungsstufe 132 im Interferometer 100 bestimmte zeitabhängige Einhüllende I ist in Fig. 4 mit ihrem räumlichen Informationsgehalt über der Ordinate $z_{11}$, aufgetragen, welche, einer bestimmten Streuzentrenposition entspricht. Diesem Signal liegt eine untersuchte Probe im Probenstrahlbereich zugrunde, welche zwei räumlich versetzte Reflexionsflächen hat.

Die Fig. 5 zeigt einen Ausschnitt aus dem Interferometer 100 aus Fig. 1 mit einer Probe 500, welche einen ersten Probenbereich 501 mit einer ersten homogenen Streuzentrendichte und einen zweiten Probenbereich 502 mit einer zweiten homogenen Streuzentrendichte hat. Diese Probe wird mit dem optischen Abbildungssystem 503 abgetastet.

Die Fig. 6 zeigt entsprechend der Darstellung von Fig. 4 eine an der Probe 500 aus Fig. 5 gemessene Intensitätsverteilung 600 für Streuzentren. Dieses Intensitätsverteilungssignal kann beispielsweise für Bildgebung weiterverarbeitet werden um so der Struktur bei dem Intensitätsverlauf 600 aus Fig. 6 eine Streuzentrendichte zuzuordnen.

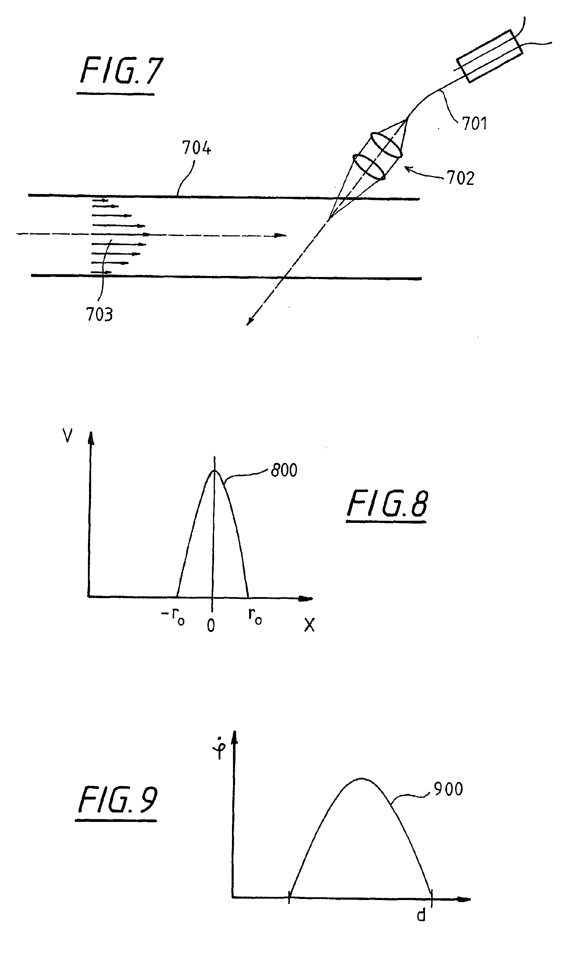

Die Fig. 7 erläutert die Aufnahme eines Geschwindigkeitsprofils einer Flüssigkeit, die durch eine Kapillare fließt. Das Interferenzlicht aus dem Lichtleiter 701 wird über ein Linsensystem 702 auf optischen Streuzentren in einem Flüssigkeitsstrom 703 der Kapillare 704 fokussiert. Wenn die Streuzentren durch den Fokus 705 im Probenstrahlbereich des Interferometers hindurchtreten, bewirken die sich bewegenden Streuzentren im Flüssigkeitsstrom beim Interferometer 100 aus Fig. 1 ein Wandern eines entsprechenden Interferenzmusters auf der CCD-Zeile. Denn das an Streuzentren im Flüssigkeitsstrom reflektierte Licht wird wie anhand von Fig. 1 beschrieben im Interferometer 100 mit Licht aus dem Referenzstrahlengang überlagert, wobei sich eine optische Weglänge im Probenstrahlengang aufgrund der sich bewegenden Streuzentren laufend ändert. Aus der zeitlichen Änderung der Phase des entsprechenden Interferenzsignals auf der CCD-Zeile 117 wird mit der Interferenzsignal-Auswerteeinheit 130 eine Bewegung der Streuzentren bestimmt. Dabei erweist sich die Geschwindigkeitsmessung als umso präziser, je geringer der Öffnungswinkel von Bewegungsrichtung der Streuzentren und Einfallsrichtung des Abtastlichtes ist.

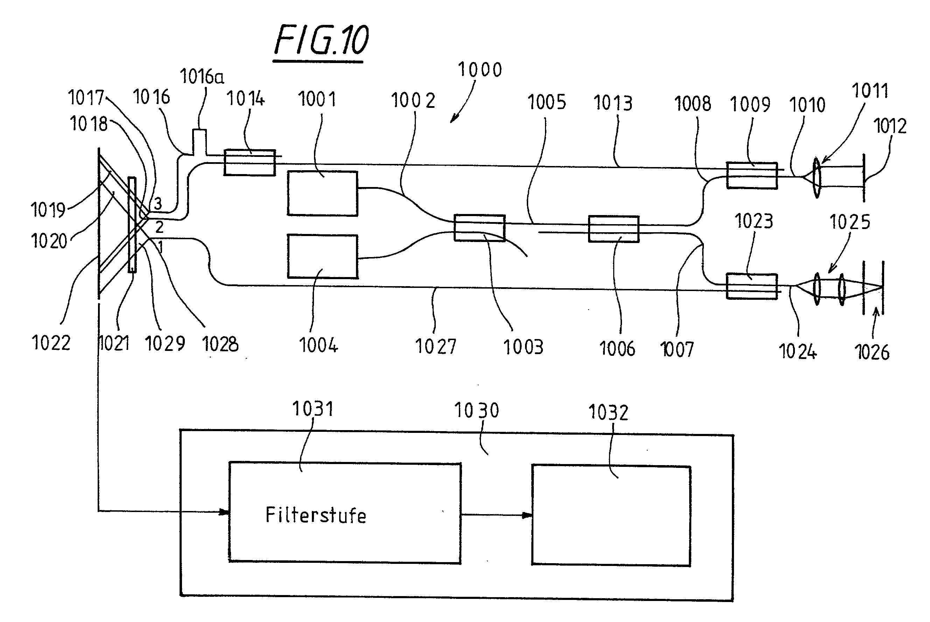

Das Srömungsprofil 800 einer laminaren Strömung in einer Kapillare mit Radius $r_0$ ist in Fig. 8 dargestellt. Das Strömungsprofil 800 hat ein Maximum im Zentrum des Flüssigkeitsstroms. An den Rändern der Kapillare ruht dagegen die Flüssigkeit.

Die Fig. 9 zeigt die zeitliche Änderungsrate $\varphi$ der Phase des gefilterten Schwingungssignals in Abhängigkeit der Streuzentrenposition d im Probenstrahlbereich, das bei der Aufnahme des Geschwindigkeitsprofils einer Flüssigkeit in einer Kapillare bei der anhand von Fig. 7 erläuterten Verwendung des Interferometers 100 aus Fig. 1. Der ortsabhängigen Änderungsrate 900 entspricht eine lokale Fließgeschwindigkeit von Streuzentren. Diese spiegelt das in Fig. 8 gezeigte Profil einer laminaren Flüssigkeitsströmung wider.

Die Fig. 10 zeigt ein Interferometer 1000, dessen Tiefenhub gegenüber dem Interferometer 100 aus Fig. 1 erweitert ist. Das Interferometer 1000 hat eine Weißlichtquelle 1001, deren Licht wie beim Interferometer 101 aus Fig. 1 in einen Lichtleiter 1002 eingekoppelt wird. Das Licht aus dem Lichtleiter 1002 wird einer Lichtkoppelungseinheit 1003 zugeführt, in der das Weißlicht mit Licht aus einer Laserdiode 1004, die Licht im sichtbaren Spektralbereich abgibt, im Verhältnis 90:10 vermischt wird. Mit dem sichtbaren Licht aus der Laserdiode 1004 wird ein Justier-Laserstrahl für den Probenbereich des Interferometers 1000 bereitgestellt. Das gemischte Licht wird über einen Lichtleiter 1005 einer Lichtkoppelungseinheit 1006 zugeführt, die es in einen Probenstrahlengang mit Lichtleiter 1007 und einen Referenzstrahlengang mit Lichtleiter 1008 im Verhältnis 90:10 aufteilt. Der Lichtkopplungseinheit 1009 ist ein Lichtleiter 1010 zugeordnet, um in dem Referenzstrahlengang in einem Referenzstrahlbereich Referenzlicht für Interferenz bereitzustellen. Das Licht aus dem Lichtleiter 1010 wird mittels eines Linsensystems 1011 einem Spiegel 1012 zugeführt. Das von diesem Spiegel 1012 zurück reflektierte Licht gelangt wieder über den Lichtleiter 1010 zur Lichtkopplungseinheit 1009. Diese Lichtkopplungseinheit 1009 koppelt 50% des Lichtes aus Lichtleiter 1010 in einen Lichtleiter 1013 ein. In dem Lichtleiter 1013 ist eine weitere Lichtkopplungseinheit 1014 angeordnet, die das in den Lichtleiter 1013 eingespeiste Licht im Verhältnis 50:50 auf einen Lichtleiter 1015 und einen Lichtleiter 1016 aufteilt. Die Lichtleiter 1015 und 1016 haben Enden 1017 und 1018, an denen Lichtstrahlenbündel 1019 und 1020 mit gaußförmigem Strahlprofil bereitgestellt werden. Diese Lichtstrahlenbündel 1019 und 1020 werden über eine Zylinderlinse 1021 auf eine CCD-Zeile 1022 zu einem Linienzug fokussiert.

Das in den Probenstrahlengang mit Lichtleiter 1007 eingekoppelte Licht wird einer Lichtkopplungseinheit 1023 zugeführt, der ein Lichtleiter 1024 mit optischem Abbildungssystem 1025 zugeordnet ist. Dieses optische Abbildungssystem 1025 umfasst zwei Linsen, die dazu dienen, in einem Probenstrahlbereich ein Probenstrahlbündel auf einer untersuchten Probe 1026 zu fokussieren. Das Reflexionslicht aus der Probe 1026 wird in den Lichtleiter 1024 zurückgeworfen und in der Lichtkoppelungseinheit 1023 mit Licht aus dem Probenzweig 1007 so vermischt, daß 50% des Lichtes aus Lichtleiter 1024 in den Lichtleiter 1027 gelangen. Der Lichtleiter 1027 hat ein Ende 1028, aus dem wiederum mit gaußförmigem Strahlprofil ein Strahlenbündel 1029 austritt. Dieses Strahlenbündel 1029 wird mittels der Zylinderlinse 1021 ebenfalls auf die CCD-Zeile 1022 zu einem Linienzug fokussiert.

Entsprechend dem Interferometer 100 aus Fig. 1 hat das Interferometer 1000 eine Interferenzsignal-Auswerteeinheit 1030 mit Filterstufe 1031 und Schwingungssignalerfassungsstufe 1032.

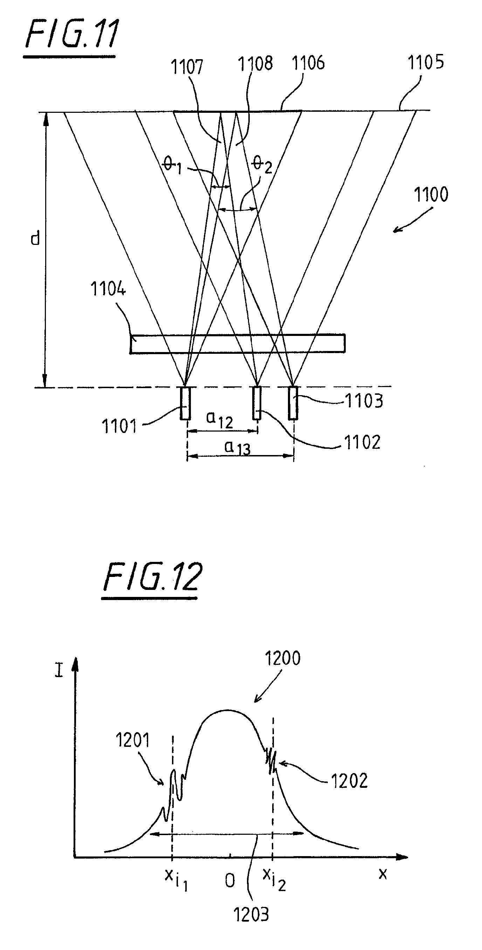

Die Fig. 11 zeigt einen Ausschnitt 1100 des Interferometers 1000 aus Fig. 10. Darin sind die Endbereiche der Lichtleiter 1017, 1018 und 1028 mit der Zylinderlinse 1021 und der CCD-Zeile 1022 aus Fig. 1 in vergrößerten Maßstab abgebildet.

Das Licht aus dem Lichtleiter 1101, 1102 und 1103 wird mittels der Zylinderlinse 1104 als Linienzug auf der CCD-Zeile 1105 abgebildet. Dabei wird der Bereich 1106 der CCD-Zeile 1105 gleichzeitig mit Licht aus den Lichtleitern 1101, 1102 und 1103 bei einer Intensität ausgeleuchtet, welche eine Minimalintensität von Licht aus jedem Lichtleiter im innerhalb des doppelten Gaußradius liegenden Intensitätsbereich garantiert. Wie anhand von Fig. 2 beschrieben ist es aber auch möglich, die CCD-Zeile entsprechend einem anderen Intensitätskriterium auszuleuchten.

Damit können Interferenzerscheinungen im Bereich 1106 mit der CCD-Zeile 1105 erfasst werden. Aufgrund der unterschiedlichen Abstände $a_{12}$ bzw. $a_{13}$ der Austrittsöffnungen des Lichtleiters 1102 vom Lichtleiter 1101 bzw. des Lichtleiters 1103 vom Lichtleiter 1101 treten entsprechend zum Interferometer 100 aus Fig. 1 Interferenzerscheinungen durch Überlagerungen von Licht aus dem Lichtleiter 1101 mit dem Lichtleiter 1102 bei den charakteristischen Frequenzen

$$k_{c1} = 2\pi \, \frac{a_{12}}{\lambda 2d}$$

und

$$k_{c2} = 2\pi \, \frac{a_{13}}{\lambda 2d}$$

auf, wobei $d$ der Abstand der Enden der Lichtleiter 1101, 1102 und 1103 von der CCD-Zeile und $\lambda$ die Wellenlänge der Weißlichtquelle 1001 ist.

Die unterschiedlichen charakteristischen Frequenzen $k_{c1}$ und $k_{c2}$ der Interferenzerscheinungen aus den entsprechenden Lichtleitern ermöglichen es, diese voneinander zu trennen und einer jeden Interferenzerscheinung den zu ihr gehörenden optischen Weglängenunterschied von Probenstrahlengang und Referenzstrahlengang zuzuordnen.

Die Fig. 12 zeigt in vergrößertem Maßstab die Intensitätsverteilung 1200 die sich für zwei Streuzentren an verschiedenen Orten im Probenstrahlbereich 1026 beim Interferometer 1000 aus Fig. 10 ergibt. Der Interferenzerscheinung 1201 am Ort $x_{i1}$ liegt die charakteristische Frequenz $k_{c1}$, der Interferenzerscheinung 1202 am Ort $x_{i2}$ liegt die charakteristische Frequenz $k_{c2}$ zugrunde.

Die räumliche Auflösung der Einrichtung zur Erfassung einer Interferenzerscheinung in Form einer CCD-Zeile 1022 ist beim Interferometer 1000 aus Fig. 10 an diese charakteristischen Frequenzen $k_{c1}$ und $k_{c2}$ angepasst. Hierzu sind der gegenseitige Abstand $a_{12}$ bzw. $a_{13}$ der Austrittsöffnungen der Lichtleiter 1101, 1102 und 1103 sowie deren Abstand $d$ von der CCD-Zeile an die Detektorpixel auf der CCD-Zeile angepaßt. Indem Abstand und Größe der Detektorpixel auf der CCD-Zeile so gehalten sind, dass die Intensitätsschwankung von Licht, welches bei solchen räumlichen Frequenzen variiert, die diese charakteristische Frequenzen übersteigen, werden Störsignale, die keine Lageinformation über Streuzentren enthalten, nicht erfaßt. Für einen besonders großen Meßbereich sind entsprechend dem Interferometer 100 aus Fig. 1 Größe und Abstand der Detektorpixel so gewählt, dass die zur größeren der beiden charakteristischen Frequenzen gehörende Periode wenigstens zwei Detektorpixel abdeckt.

Zur Erfassung einer Lageinformation über ein Streuzentrum im Probenstrahlbereich wird die CCD-Zeile 1022 aus Fig. 10 zeitlich aufeinanderfolgend ausgelesen und die Helligkeitsinformation eines jeden CCD-Pixels in einen Spannungswert umgewandelt. Durch den seriellen Auslesevorgang wird ein zeitabhängiges elektrisches Spannungssignal generiert, aus dem durch Filterung, welche eine Entstörung der Interferenzsignale bewirkt, die den Interferenzsignalen auf der CCD-Zeile innenwohnenden Informationen gewonnen werden können.

Hierzu wird das zeitabhängige elektrische Spannungssignal in der Filterstufe 131 der Interferenzsignal-Auswerteeinheit 130 beim Interferometer aus Fig. 1 einer schmalbandigen Bandpassfilterung auf den zeitlichen Frequenzen unterzogen, die den räumlichen charakteristischen Frequenzen $k_{c1}$ und $k_{c2}$ entsprechen. Indem die Filterstufe 1031 als Parallelschaltung zweier Heterodynfilter mit zwei unterschiedlichen Filterfrequenzen ausgebildet ist, die den charakteristischen Frequenzen $k_{c1}$ und $k_{c2}$ entsprechen, wird eine besonders schmalbandige Filterung bewirkt.

In der Schwingungssignalerfassungsstufe 1032, die der Filterstufe 1031 beim Interferometer 1000 aus Fig. 10 nachgeschaltet ist, werden die Amplituden der gefilterten Spannungssignale bestimmt. Die Größe dieser Spannungssignale zu einem bestimmten Zeitpunkt sind ein Maß für Lage und Größe für eines Streuzentrums im Probenstrahlbereich.

Weiter wird in der Schwingungssignalerfassungsstufe 1032 die Phasenlage der gefilterten Spannungssignale bezüglich einem Referenzwert bestimmt. Hierfür werden die Zeitpunkte des Nulldurchgangs der gefilterten Spannungssignale ermittelt. Durch Verfolgen der Phasenlage einer Interferenzerscheinung bei aufeinanderfolgenden Auslesevorgängen der CCD-Zeile kann so durch Messen der Phasenlage des gefilterten Spannungssignals auf die Bewegung eines Streuzentrums im Probenstrahlbereich des Interferometers 1000 aus Fig. 10 geschlossen werden.

Um einen gute Signaltrennung der Interferenzerscheinungen bei der charakteristischen Frequenz $k_{c1}$ und $k_{c2}$ zu ermöglichen, sind Wellenlänge λ, Abstand $d$ der Enden der Lichtleiter 1101, 1102 und 1103 von der Ebene der CCD-Zeile 1105 sowie die Abstände $a_{12}$ bzw. $a_{13}$ der Lichtleiter 1101, 1102 und 1103 voneinander so gewählt, dass die eine charakteristische Frequenz nicht ein ganzzahliges vielfaches der anderen charakteristischen Frequenz ist.

Die Länge der Verzögerungsstrecke 1016a beim Interferometer 1000 aus Fig. 10 ist dabei an die Kohärenzlänge des verwendeten Weißlichtes aus der Weißlichtquelle 1001 so angepasst, dass sich ein kontinuierlicher, erweiterter Tiefenhub des Interferometers ergibt, der in etwa dem doppelten des Tiefenhubs für ein Interferometer mit lediglich einen Referenzzweig entspricht.

Es versteht sich von selbst, das der Messbereich des entsprechenden Interferometers aus Fig. 10 durch hinzufügen und weiterer Verzögerungsstrecken, in die Licht parallel eingekoppelt wird, Schritt für Schritt vergrößert werden kann.

Ein Operationsmikroskop, das mit einem anhand von Fig. 1 und Fig. 10 beschriebenen Interferometer ausgerüstet ist ermöglicht es, einem Operateur Bereiche eines Operationsgebietes mit hoher optischer Auflösung sichtbar zu machen, die mit Licht im sichtbaren Spektralbereich nicht zugänglich sind.

**Patentansprüche**

1. Interferometer mit

   - wenigstens einem Probenstrahlengang zur Bereitstellung von Licht in einem Probenstrahlbereich,
   - wenigstens einem Referenzstrahlengang,
   - wenigstens einer Einheit zur Überlagerung von Licht aus dem Probenstrahlbereich mit Licht aus dem Referenzstrahlengang,
   - einer Einrichtung zur Erfassung einer Interferenzerscheinung von Licht aus dem Probenstrahlbereich und Licht aus dem Referenzstrahlengang,

**dadurch gekennzeichnet, dass**

- eine räumliche Auflösung der Einrichtung zur Erfassung einer Interferenzerscheinung (117, 204, 1022, 1105) auf eine charakteristische Frequenz der Interferenzerscheinung abgestimmt ist.

2. Interferometer gemäß Anspruch 1, **dadurch gekennzeichnet, dass** wenigstens ein Bereich der Einrichtung zur Erfassung einer Interferenzerscheinung als CCD-Zeile (117, 204, 1022, 1105) ausgebildet ist und die Zahl der von einer charakteristischen Periode der Interferenzerscheinung erfassten Detektor-Pixel auf der CCD-Zeile (117, 204, 1022, 1105) wenigstens zwei beträgt.

3. Interferometer gemäß Anspruch 1 oder 2, **dadurch gekennzeichnet, dass** die Einheit zur Überlagerung von Licht aus dem Probenstrahlbereich mit Licht aus dem Referenzstrahlengang ein optisches Abbildungssystem (114, 123, 115, 1017, 1018, 1021) umfaßt, dessen Apertur für Probenstrahlengang und Referenzstrahlengang an die Einrichtung zur Erfassung einer Interferenzerscheinung (117, 204, 1022, 1105) angepasst ist.

4. Interferometer gemäß einem der Ansprüche 1-3, **dadurch gekennzeichnet, dass** zum Ausleuchten eines lichtempfindlichen Bereiches der Einrichtung zur Erfassung einer Interferenzerscheinung (117, 204, 1022, 1105) mit Licht aus dem Referenzstrahlengang und mit Licht aus dem Probenstrahlbereich ein optisches Abbildungssystem (114, 123, 115, 1017, 1018, 1021) vorgesehen ist, das den lichtempfindlichen Bereich mit Licht aus dem Probenstrahlbereich und mit Licht aus dem Referenzstrahlengang bis zum doppelten Gaußradius ausleuchtet.

5. Interferometer gemäß einem der Ansprüche 1- 4, **dadurch gekennzeichnet, dass** ein in Lichtleitern (102, 105, 107, 108, 110, 119, 113, 122, 1002, 1005, 1007, 1008, 1010, 1024, 1013, 1015, 1016) geführter Probenstrahlengang und Referenzstrahlengang vorgesehen ist, wobei ein gegenseitiger Abstand $2a$ der Lichtleiter-Enden (114, 123, 1017, 1018, 1028), aus denen Licht zu einem lichtempfidlichen Bereich der Einrichtung für die Erfassung einer Interferenzerscheinung austritt, ein Abstand $d$ der Lichtleiter-Enden (114, 123, 1017, 1018, 1028) zu einem lichtempfindlichen Bereich der Einrichtung zur Auswertung einer Interferenzerscheinung, eine Wellenlänge $\lambda$ des in dem Interferometer verwendeten Interferenzlichtes und die Abmessung $\Delta x$ eines Detektor-Pixels einer CCD-Zeile (117, 1022) im lichtempfindlichen Bereich der Einrichtung zur Erfassung einer Interferenzerscheinung folgender Beziehung genügen:

$$\frac{\lambda d}{2a\Delta x} \geq 2.$$

6. Interferometer gemäß einem der Ansprüche 1-5, **dadurch gekennzeichnet, dass** der Einrichtung zur Erfassung einer Interferenzerscheinung (117, 204, 1022, 1105) eine Filterstufe (131, 1131) zur Entstörung einer erfassten Interferenzerscheinung zugeordnet ist.

7. Interferometer gemäß Anspruch 6, **dadurch gekennzeichnet, dass** die Filterstufe (131, 1131) als Heterodyn-Filterstufe ausgebildet ist, wobei die Heterodyn-Filterfrequenz einer charakteristischen Frequenz der Interferenzerscheinung entspricht.

8. Interferometer mit

- wenigstens einem Probenstrahlengang, zur Bereitstellung von Licht in einem Probenstrahlbereich,
- wenigstens einem Referenzstrahlengang,
- wenigstens einer Einheit zur Überlagerung von Licht aus dem Probenstrahlbereich mit Licht aus dem Referenzstrahlengang und
- einer Einrichtung zur Erfassung einer Interferenzerscheinung von Licht aus dem Probenstrahlbereich und Licht aus dem Referenzstrahlengang,
  insbesondere nach einem der Ansprüche 1-7,

**dadurch gekennzeichnet, dass**

- der Einrichtung zur Erfassung einer Interferenzerscheinung eine Schwingungssignalerfassungsstufe (132, 1132) zur Bestimmung der zeitlichen Änderung einer Interferenzerscheinung zugeordnet ist.

9. Interferometer mit

   - wenigstens einem Probenstrahlengang zur Bereitstellung von Licht in einem Probenstrahlbereich,
   - wenigstens einem Referenzstrahlengang,
   - wenigstens einer Einheit zur Überlagerung von Licht aus dem Probenstrahlbereich mit Licht aus dem Referenzstrahlengang und
   - einer Einrichtung zur Erfassung einer Interferenzerscheinung von Licht aus dem Probenstrahlbereich und Licht aus dem Referenzstrahlengang,
     insbesondere nach einem der Ansprüche 1-8,

   **dadurch gekennzeichnet, dass**

   - neben einem ersten Referenzstrahlengang ein zweiter Referenzstrahlengang vorgesehen ist.

10. Interferometer gemäß Anspruch 9, **dadurch gekennzeichnet, dass** die optische Weglänge von erstem und zweitem Referenzstrahlengang verschieden ist.

11. Interferometer gemäß einem der Ansprüche 9 oder 10, **dadurch gekennzeichnet, dass** der Quotient aus einer charakteristischen Frequenz einer auf einem Probenstrahlengang und einem ersten Referenzstrahlengang basierenden Interferenzerscheinung an einer Einrichtung zur Erfassung der Interferenzerscheinung und einer charakteristischen Frequenz einer auf einem Probenstrahlengang und einem zweiten Referenzstrahlengang basierenden Interferenzerscheinung an einer Einrichtung zur Erfassung der Interferenzerscheinung (1022) weder eine ganze Zahl noch ein ganzzahliger Bruch ist.

12. Operationsmikroskop, **dadurch gekennzeichnet, dass** diesem ein Interferometer nach einem der Ansprüche 1-11 zugeordnet ist.

13. Verfahren zur interferometrischen Bestimmung der Bewegungsgeschwindigkeit eines Objektes, insbesondere zur ortsaufgelösten interferometrischen Bestimmung der Bewegungsgeschwindigkeit eines Mediums, bei dem

   - über wenigstens einen Probenstrahlengang Licht in einem Probenstrahlbereich bereitgestellt wird und
   - Licht aus dem Probenstrahlbereich mit Licht aus einem Referenzstrahlengang zur Erzeugung einer Interferenzerscheinung überlagert wird,

   **dadurch gekennzeichnet, dass**

   - eine zeitliche Änderung der Interferenzerscheinung erfasst wird und
   - aus der zeitlichen Änderung der Interferenzerscheinung eine Bewegungsgeschwindigkeit bestimmt wird.

14. Verfahren gemäß Anspruch 13, **dadurch gekennzeichnet, dass** Licht aus wenigstens einem Probenstrahlengang in einem Probenbereich fokussiert wird.

15. Verfahren gemäß Anspruch 13 oder 14, **dadurch gekennzeichnet, dass**

   - die Interferenzerscheinung mittels einer CCD-Zeile erfasst wird und
   - die zeitliche Änderung der Interferenzerscheinung aus einem Vergleich von ausgelesenen Bildern der CCD-Zeile (1017, 1022) bestimmt wird.

FIG.1

Filterstufe

EP 1 314 953 A2

# FIG.2

# FIG.3

_FIG.4_

_FIG.5_

_FIG.6_

_FIG.7_

704

701

702

703

V

800

_FIG.8_

$-r_o$  0  $r_o$  X

$\dot{\varphi}$

900

_FIG.9_

d

# FIG.10

Filterstufe

EP 1 314 953 A2

FIG.11

FIG.12